# EUROPEAN PATENT SPECIFICATION

(11) **EP 1 048 813 B1**
(45) Date of publication and mention of the grant of the patent: **16.06.2004**
(21) Application number: 00201368.8
(22) Date of filing: 17.04.2000
(51) Int. Cl.: E05F 15/14, F16H 55/26

(54) **Rack for electromechanical operating systems of doors and the like**
Zahnstange für elektromechanische Antriebssysteme für Türen und dergleichen
Crémaillère pour sytèmes d'entraînements électromécaniques de portes et similaires

(30) Priority: 30.04.1999 IT TV990050
(43) Date of publication of application: 02.11.2000
(73) Proprietor: NICE SpA, 31046 Oderzo (Treviso) (IT)
(72) Inventor: Galberti, Lorenzo, 30024 Musile di Piave (Venezia) (IT)
(74) Representative: Ferroni, Filippo

(56) References cited:
- EP-A- 0 631 031
- DE-A- 19 606 504

## Description

The present invention relates to a rack working in combination with a driver pinion, for the electromechanical operation of doors, gates, iron grilles and the like, of the sliding type as used, for example, in remote-controlled gates or other applications.

As is known, in this kind of operating system the rack is usually mounted on the door to be operated, while the pinion with the associated motor are fixed onto the structure on the outside thereof which, depending on circumstances, may be the frame,a portal or similar.

One of the difficulties usually encountered during installation of these electromechanical operating systems, consists in mounting the rack.

Indeed, in order to perform this operation, in many cases it is necessary to adapt the rack to the door, main entrance door, gate, etc., because if, on one hand, the racks are industrial products which are therefore mass-produced with predetermined dimensions, on the other hand it is obvious that the various doors, main entrance doors and gates are, however, nearly always different from each other in terms of shape and size.

Consequently, it is not always possible to have the correct rack for each situation and it is thus necessary to adapt them on-site to the specific application, when the electromechanical operating systems are mounted.

In order to remedy this situation, modular racks are known, that is, racks consisting of a series of toothed segments which have a limited length (usually a few tens of centimetres) and the ends thereof are suitably shaped, so that they can be joined together and form a rack of the desired length. For this purpose the toothed segments are generally made by moulding of plastics or similar materials.

An example of this type of rack is illustrated in European Patent Application EP-A-631031 in the name of Marantec Antriebs, published in 1994.

In this document the toothed segments are joined together by means of respective ends with shape of tenon and mortise; in order to fix them to the door on which the rack must be applied, they are however usually coupled with a support section having longitudinally lateral wings for fixing it.

Said wings are indeed provided with a few holes which receive the screws used for fixing the section to the door.

A solution such as that described above essentially has two drawbacks.

The first one is that the overall weight and the structure of the rack are negatively increased by the section, so that it becomes impractical to assemble (the various segments must first be joined together and then coupled with the section) and difficult to install in particular in the case of applications where there is a limited amount of available space (likewise, for example, in the case of small gates which perhaps cannot be fitted with all the screws necessary to fix the support section).

The second, more important, drawback consists in the fact that in such a rack only the toothed segments are modular, while the section is not; consequently, there is no longer the possibility of easily adapting the length of the rack to the various situations which occur in reality.

Indeed, it can be understood that in order to mount the rack, it is necessary to cut the section to size in each case and this therefore cancels out the advantages resulting from the modular structure of the modular toothed segments.

There is also another important limit concerning this type of rack, as well as other types how it will be understood more clearly below.

With reference to the figures accompanying the application EP-A-631031 it can be desumed that, when the support section is cut so as to adapt it to the door on which it is applied, the cut may occur in any position between the adjacent holes provided for fixing thereof.

It is indeed evident that the length required for the section may vary from one case to another, such that its cut end will be located at a distance from the closest fixing points which is variable in each case.

Consequently, it may be concluded that such a cut end always projects with respect to the aforementioned fixing points and is therefore inevitably subject to bending, when the rack meshes with the actuating pinion in that zone.

It can therefore be assumed that this bending action result in operating difficulties affecting the electromechanical operating system.

Considerations similar to those set out above are generally applicable to all racks where the toothed segments are associated with a support element such as the section described above, or alternative solutions of an equivalent nature.

In this connection, however, it must be pointed out that according to the present state of the art, modular racks without support sections for the toothed segments exist.

In these racks the toothed segments are made of plastics (for example reinforced nylon), in a similar manner to that already described above, and have lugs which are formed in one piece therewith (usually by means of moulding), in spaced positions and extending transversely with respect thereto; these lugs are provided with slots intended to receive the screws for performing fixing to the door.

As can be understood this kind of rack represents an improvement over the one described above, because it eliminates all the drawbacks associated with the presence of the support section; however, in this case there are still assembling and operating difficulties which raise a need for alternative solutions.

Indeed, when the toothed segment located at the end of the rack is cut, the problems already described in connection with the support section occur again, *mutatis mutandis*.

Namely, also in this case the cut may occur at any point along the toothed segment, such that its remaining part is inevitably located in a position projecting with respect to the other fixing points of the toothed segment, with the risk of being subject to bending when it meshes with the actuating pinion.

Furthermore, in these racks the lugs referred to above generally extend on one side only of the toothed segment; however, in reality, it may happen that it is not always possible to fix the segments to the associated door at points which are located only above or only below the profile of the rack teeth.

In other words, these racks are not operationally very flexible because their configuration does not allow them to be easily adapted for the different real situations which may arise in each case.

The object of the present invention is to remedy this state of the art.

That is to say, it aims at providing a rack of the modular type with such structural and operational features that it may be easily adapted either as regards the dimensions and the manner of mounting, to any application without adversely affecting the performance and reliability.

This object is achieved by a rack characterized in the claims appended to the present description.

The invention will be understood more clearly in the light of a preferred and a non-exclusive embodiment thereof, described hereinbelow with reference to the accompanying drawings in which:
- Fig. 1 shows an axonometric view of a rack according to the invention;
- Fig. 2 shows an axonometric view, from a different angle and with a part removed, of a section of the rack of Fig. 1;
- Fig. 3 shows a side view of a segment of the rack of preceding figures;
- the pairs of Figures 4a,4b; 5a,5b; 6a,6b;show each a front view and a sectioned view of respective ways of fixing the rack according to the invention;
- Fig. 7 shows an axonometric view of one of the applications of the rack according to the preceding figures.

With reference to these drawings, the rack of this example has been indicated in its entirety by 1 and, as can be seen, consists of a series of rectilinear toothed segments 2 joined together by means of respective ends 3, 4 in the form of tenon and mortise.

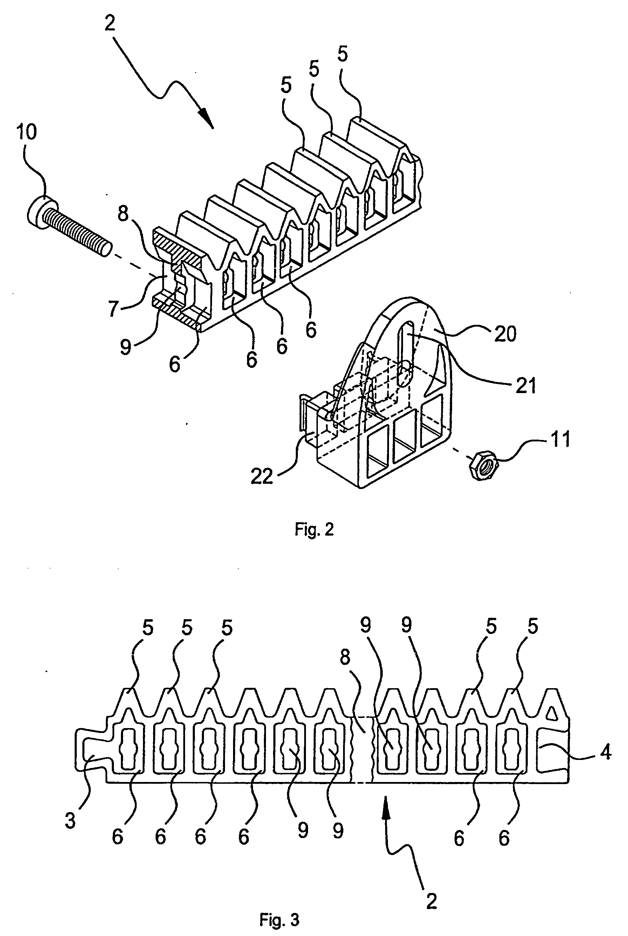

More particularly, the segments 2 are made of plastic material and have a structure with a cell-like configuration in which two recesses 6 and 7 are formed beneath the profile of each tooth 5, said recesses being symmetrical with respect to a wall 8 forming the central core of the segment 2 (see Fig. 2).

The wall 8 is provided, in connection with each pair of the recesses 6 and 7, with a hole 9 for receiving a screw 10 described in greater detail below.

As can indeed be seen from the figures, the toothed segments 2 are associated with brackets 20 used for mounting them.

These brackets have a flat part containing a slot 21 used to attach them to the door 2 on which the rack must be fixed and having, extending therefrom, three projections 22 internally hollow and having a shape matching that of the recesses 6 and 7.

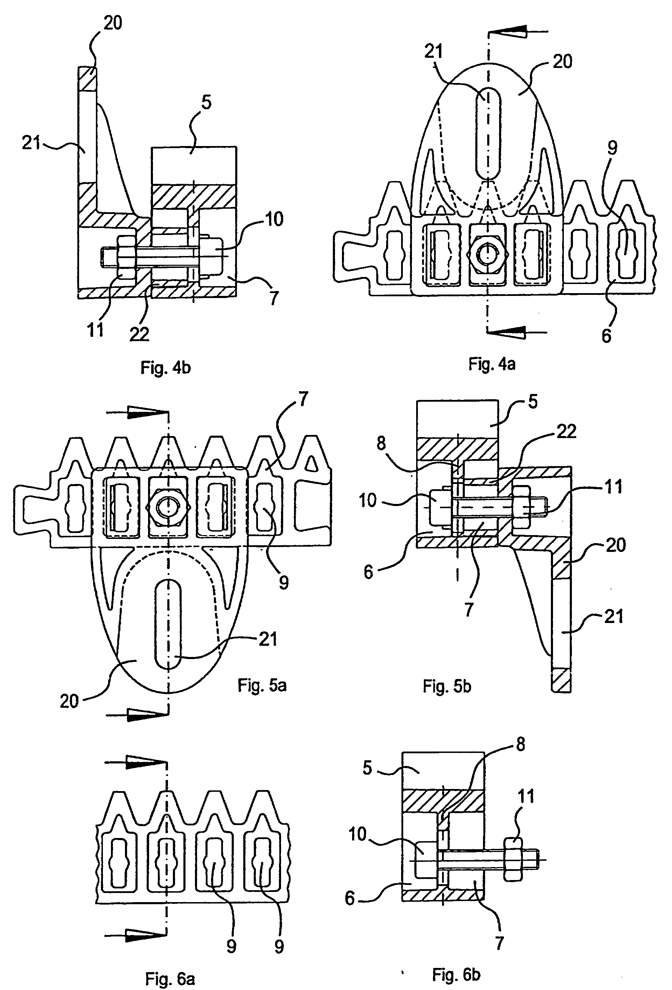

The three projections 22 may be inserted inside respective recesses 6 or 7, depending on the side of the rack to which they are applied, and the connection between the bracket and the toothed segment is then secured by the screw 10 which, passing through the hole 9, extends into one of the projections 22 and is then locked by a nut 11 (see Figures 4b, 5b).

The rack formed by the toothed segments 2 connected together and associated with the corresponding brackets 20 is then fixed on the door, main gate or the like, by means of additional screws (not shown in the drawings) which pass through the slots 21 and engage into fixing holes provided in the door.

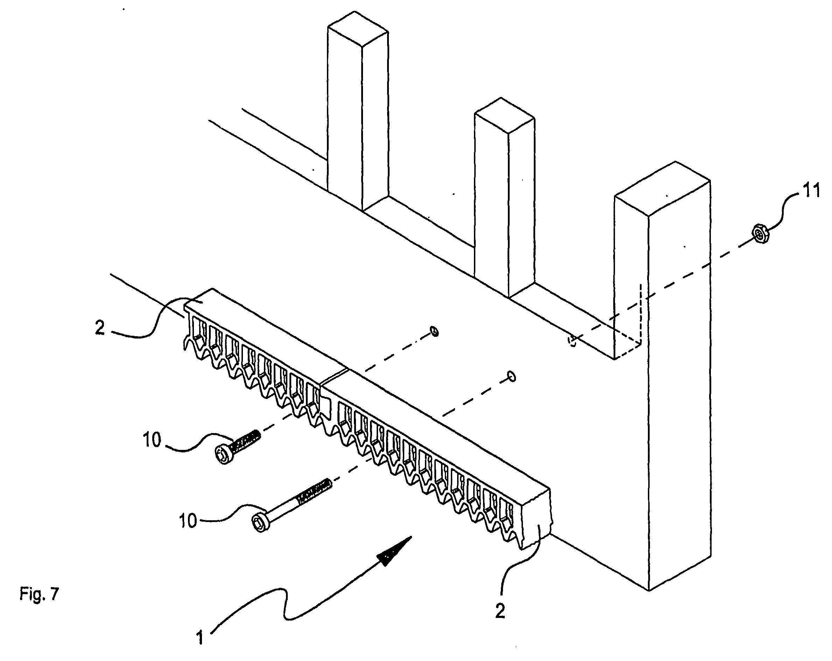

The brackets 20, however, are not always necessary in order to mount the rack according to the invention; indeed how it is shown in Figures 6a, 6b and 7, the toothed segments 2 may be applied directly onto the moving leaf of a gate C (a part of which is visible in Fig. 7), with the aid of the holes 9.

From the description provided above it is possible to understand how the invention achieves the objects initially set out.

First of all it is important to point out that the terminal segment 2 of the rack, i.e. the one which is located at an end thereof, may be cut at any point so as to adapt it to the corresponding door 2, without the cut end remaining projecting with respect to the closest fixing points.

This end may, in fact, be in any case fixed to the door by means of the recesses 6, 7 and the holes 9 which are located along the whole of the toothed segment 2 and not only at its ends as generally occurs in the known art.

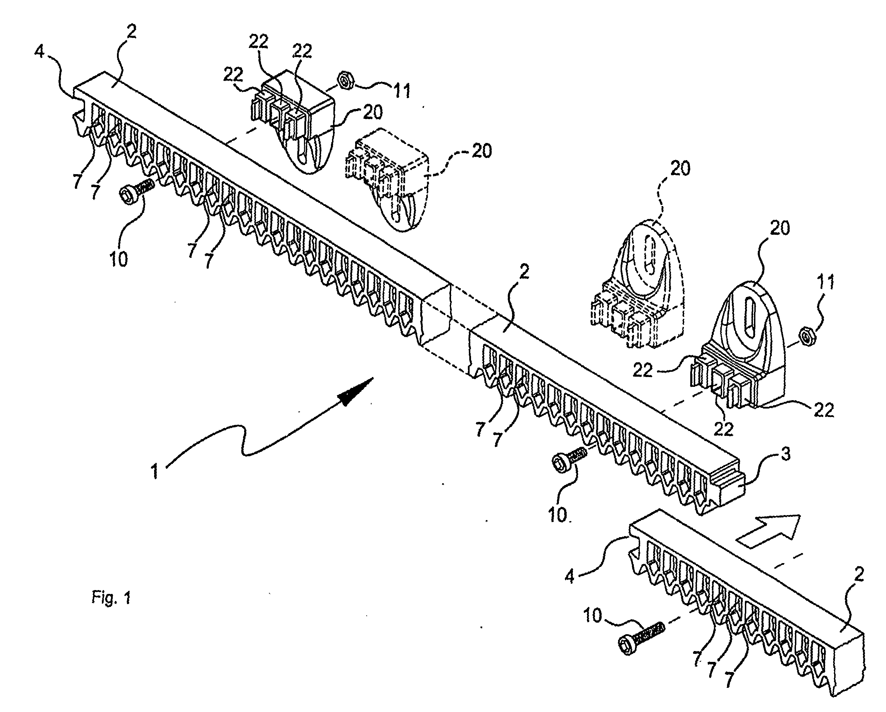

However, it should be noted in particular that in the rack according to the invention the brackets 20 may be applied at any point along the toothed segments 2 (see, in this connection, Fig. 1 where possible alternative positions of the brackets 20 are shown in broken lines), thereby allowing the rack to be fixed in the manner most suited to the circumstances which, as already mentioned, may vary from one situation to another.

With reference to Figures 1, 4a, 4b, 5a, 5b, it is also possible to appreciate how the brackets 20 may be equally well associated with the segments 2, so that the slot 21 be located above or below the level of the teeth 5.

This means that, owing to the form of the projections 22 and the recesses 6 and 7 (which in this case are prism-shaped but could also have a cylindrical or other shape), the fixing system according to the invention allows the brackets 20 to be used, turning them upside down with respect to the toothed segments 2, thereby further increasing the versatility of the invention in which the rack may be applied with the teeth oriented in any direction (upwards or downwards) without requiring any adaptational modifications.

Consequently, it may be understood how the industrial production costs of such a rack are also reduced considerably since, basically, it is sufficient to have a single type of toothed segment and bracket in order to be able to satisfy any requirement of the users.

Obviously variations of the invention with respect to the embodiment described heretofore possible.

By way of example it is indeed possible to imagine constructing the brackets with a number of projections 22 other than three; the solution described here, however, ensures that the toothed segments are properly supported by the brackets and prevents any relative rotation thereof.

Basically, when the projections 22 are engaged inside the respective recesses 6 or 7, the brackets 20 and the toothed segments 2 form a rigid body as regards the stresses which act parallel to the plane of the door or gate leaf to which the rack is fixed; the screws 10 therefore only have the function of preventing separation of the segments 2 from the brackets 20 in a direction perpendicular to this plane.

It is therefore obvious that, on the basis of this operating principle, any other equivalent solution obtained by shaping the brackets and the toothed segments of the rack so as to obtain the same effects, falls within the teaching provided by the invention.

It is therefore also possible to provide racks in accordance with the abovementioned principle, by providing the brackets with only one or two projections or, if necessary, also more than three projections.

Furthermore, a possible equivalent alternative solution could be that of a rack in which the segments 2, instead of the recesses 6 and 7, have projections, while, conversely, the brackets 20 are provided with hollow seats or recesses instead of the projections.

Basically, with such an alternative solution the positions of the male and female elements which fix together the brackets and the toothed segments would be reversed, although the result would be the same as that described above.

However, this solution appears to be less convenient than that shown in the drawings because it could perhaps create difficulties when arranging the segments on the door surface owing to the projections, although such a solution is nevertheless still possible.

Also with regard to the screws 10 it is possible to imagine embodiments of the rack in which they are eliminated, at least as regards the connection between brackets and segments.

For example, the connection between the projections 22 and the recesses 6, 7 could be of the snap-engagement type; in such a case the brackets could be fastened to the toothed segments without the aid of the screws 10.

Finally, it is possible to envisage providing a rack in which the toothed segments do not have the wall 8 which forms the central bracing core thereof; in such an alternative solution it would be necessary to provide the thicknesses with suitable dimensions so as to provide the toothed segments with an adequate flexural rigidity, while the recesses 6 and 7 would no longer be separate from each other. Consequently, also as regards fixing of the screws 10, it would then be necessary to replace the function of the wall 8 provided with the holes 9 through which these screws pass.

These and other possible variations nevertheless fall within the scope of the claims which follow.

## Claims

1. Modular rack for electromechanical operating systems intended for doors and the like, comprising a plurality of toothed segments (2) having ends (3, 4) mutually matching so as to connect them in series, **characterized in that** the toothed segments (2) have a substantially cell-like configuration which is provided, underneath the profile of their teeth (5), with respective recesses (6, 7) open towards the side of the segments, and **in that** it comprises a plurality of support brackets (20) provided with one or more projections (22) designed to engage inside these recesses.

2. Rack according to Claim 1, wherein the recesses (6, 7) and the projections (22) are so-shaped that the latter engage in the former also when the brackets (20) are turned upside down with respect to the toothed segments (22).

3. Rack according to Claims 1 and 2, wherein the projections (22) are axially hollow and the brackets (20) are secured to the toothed segments (2) by means of screws (10) passing through the projections and the recesses (6, 7).

4. Rack according to Claims 1 and 2, wherein the brackets (20) are secured to the toothed segments (2) by means of a snap-engagement system.

5. Rack according to any one of Claims 1 to 4, wherein the toothed segments (2) are provided with a middle wall (8) extending along them and defining, for each tooth (5), a pair of separate recesses (6, 7) open on a respective side of the segment.

6. Rack according to Claim 5, wherein the middle wall (8) of the toothed segments is provided with a hole (9) in connection with each pair of recesses (6, 7), which receives a screw (10) transversely with respect to the toothed segments.

7. Rack according to any one of the preceding claims, wherein the recesses (6, 7) and the projections (22) have a respectively matching, prism shape or cylindrical shape.

## Patentansprüche

1. Modulares Gehäuse für elektromechanische Bediensysteme, die für Türen und dergleichen vorgesehen sind, mit
einer Mehrzahl gezahnter Segmente (2) mit Enden (3, 4), die gegenseitig zusammenpassen, um sie in Reihe zu verbinden,
**dadurch gekennzeichnet,**
**dass** die gezahnten Segmente (2) einen im Wesentlichen zellenartigen Aufbau aufweisen, der unter dem Profil ihrer Zähne mit jeweiligen Vertiefungen (6, 7) versehen ist, die zu der Seite der Segmente hin offen sind, und
**dass** es eine Mehrzahl von Tragstützen (20) aufweist, die mit einem oder mehreren Vorsprüngen (22) versehen sind, die zum Eingreifen in diese Vertiefungen entworfen sind.

2. Gehäuse nach Anspruch 1, bei dem die Vertiefungen (6, 7) und die Vorsprünge (22) so geformt sind, dass die Letzteren auch dann in die Ersteren eingreifen, wenn die Stützen (20) im Hinblick auf die gezahnten Segmente (2) mit der Oberseite nach unten gedreht sind.

3. Gehäuse nach Anspruch 1 oder 2, bei dem die Vorsprünge (22) axial hohl sind und die Stützen (20) mit den gezahnten Segmenten (2) mittels Schrauben (10) befestigt sind, die durch die Vorsprünge und die Vertiefungen (6, 7) gehen.

4. Gehäuse nach Anspruch 1 oder 2, bei dem die Stützen (20) mit den gezahnten Segmenten (2) mittels eines Schnappeingreifsystems befestigt sind.

5. Gehäuse nach einem der Ansprüche 1 bis 4, bei dem die gezahnten Segmente (2) mit einer Mittelwand (8) versehen sind, die sich ihnen entlang erstreckt und für jeden Zahn (5) ein Paar getrennter Vertiefungen (6, 7) abgrenzt, die an einer jeweiligen Seite des Segments offen sind.

6. Gehäuse nach Anspruch 5, bei dem die Mittelwand (8) der gezahnten Segmente mit einem Loch (9) versehen ist, das mit jedem Paar von Vertiefungen (6, 7) verbunden ist und eine Schraube (10) quer im Hinblick auf die gezahnten Segmente empfängt.

7. Gehäuse nach einem der vorigen Ansprüche, bei dem die Vertiefungen (6, 7) und die Vorsprünge (22) eine jeweils zusammenpassende Prismenform oder Zylinderform aufweisen.

## Revendications

1. Crémaillère modulaire pour systèmes d'entraînement électromécaniques de portes ou similaires, comprenant une pluralité de segments dentés (2) ayant des extrémités (3, 4) s'adaptant mutuellement afin de les connecter en séries, **caractérisée en ce que** les segments dentés (2) ont une configuration globalement en forme de cellules munie, en-dessous du profil de leurs dents (5), d'évidements (6, 7) respectifs ouverts vers le côté des segments, et **en ce qu'**elle comporte une pluralité de supports (20) munis d'un ou plusieurs bossages (22) destinés à s'introduire à l'intérieur desdits évidements.

2. Crémaillère selon la revendication 1, dans laquelle les évidements (6, 7) et les bossages (22) sont conformés de telle manière que les seconds s'introduisent dans les premiers même lorsque les supports (20) sont tournés tête en bas par rapport aux segments dentés (2).

3. Crémaillère selon la revendication 1 ou la revendication 2, dans laquelle les bossages (22) sont creux axialement et les supports (20) sont fixés aux segments dentés (2) au moyen de vis (10) traversant les bossages et les évidements (6, 7).

4. Crémaillère selon la revendication 1 ou la revendication 2, dans laquelle les supports (20) sont fixés aux segments dentés (2) au moyen d'un système à encliquetage.

5. Crémaillère selon l'une quelconque des revendications 1 à 4, dans laquelle les segments dentés (2) sont munis d'une paroi médiane (8) s'étendant sur leur longueur et définissant, pour chaque dent (5), une paire d'évidements séparés (6, 7) ouverts sur les côtés respectifs du segment.

6. Crémaillère selon la revendication 5, dans laquelle la paroi médiane (8) des segments dentés comporte un orifice (9) en liaison avec chaque paire d'évidements (6, 7), qui reçoit une vis (10) transversalement par rapport aux segments dentés.

7. Crémaillère selon l'une quelconque des revendications précédentes, dans laquelle les évidements (6, 7) et les bossages (22) ont des formes respectives en concordance, de forme prismatique ou de forme cylindrique.
